# EUROPÄISCHE PATENTSCHRIFT

(11) **EP 4 019 336 B1**
(45) Veröffentlichungstag und Bekanntmachung des Hinweises auf die Patenterteilung: **01.11.2023**
(21) Anmeldenummer: 21213972.9
(22) Anmeldetag: 13.12.2021
(51) Int. Cl.: B60R 13/02, B60P 7/08, B62D 65/02, B62D 65/14

(54) **SELBSTENTRIEGELNDE ABDECKUNG, VERKLEIDUNGSBAUTEIL UND VERFAHREN ZUR MONTAGE EINES VERKLEIDUNGSBAUTEILS**
SELF-UNLOCKING COVER, TRIM COMPONENT AND METHOD FOR MOUNTING A TRIM COMPONENT
RECOUVREMENT À LIBÉRATION AUTOMATIQUE, COMPOSANT DE REVÊTEMENT ET PROCÉDÉ DE MONTAGE D'UN COMPOSANT DE REVÊTEMENT

(30) Priorität: 22.12.2020 DE 102020216446
(43) Veröffentlichungstag der Anmeldung: 29.06.2022
(60) Teilanmeldung: 23169350.8
(73) Patentinhaber: VOLKSWAGEN AG, 38440 Wolfsburg (DE)
(72) Erfinder: Wahlandt, Felix, 10557 Berlin (DE); Grobe, Michaela, 38557 Osloß (DE)

(56) Entgegenhaltungen:
- EP-A2- 1 327 564
- DE-A1-102016 014 791
- DE-U1- 9 012 651
- US-A1- 2003 093 955
- US-A1- 2009 179 458
- US-A1- 2016 031 490

## Beschreibung

Die vorliegende Erfindung betrifft ein Verkleidungsbauteil, ein Fahrzeug, ein Verfahren zur Montage eines Verkleidungsbauteils und ein Verfahren zur Herstellung eines Fahrzeugs. Die Erfindung liegt insbesondere auf dem Gebiet der Fahrzeugtechnik, insbesondere der Fahrzeuginnenräume.

Für manche Fahrzeuge ist es wünschenswert, an manchen Stellen im Fahrzeuginnenraum Funktionselemente bereitzustellen, welche durch die Verkleidung des Fahrzeuginnenraums hindurchragen müssen. Beispielsweise kann es sich bei solchen Funktionselementen um Ösen handeln, welche einerseits vom Fahrzeuginnenraum aus zugänglich sein müssen und andererseits mit der Fahrzeugkarosserie verbunden sein müssen. Beispielsweise kann eine solche Öse zur Befestigung eines Gepäcknetzes dienen, welches die gegebenenfalls im Gepäckraum des Fahrzeugs befindliche Ladung gegen ein Verrutschen und insbesondere gegen ein Eindringen in den Fahrgastraum sichert. Um das Bereitstellen solcher Funktionselemente zu ermöglichen, ist es erforderlich, entsprechende Funktionsöffnungen in der Verkleidung des Fahrzeuginnenraums bereitzustellen.

Da jedoch solche Funktionselemente und die zugehörigen Funktionsöffnungnen in der Fahrzeugverkleidung nicht in jedem Fahrzeug gewünscht beziehungsweise benötigt sind, beispielsweise weil es sich dabei um ein optionales Zubehör handelt, welches je nach Kundenwunsch vorgesehen oder weggelassen wird, ist es herkömmlicherweise erforderlich, zumindest zwei verschiedene Varianten für die jeweiligen Verkleidungsbauteile vorzuhalten, nämlich eine Variante mit Funktionsöffnung und eine weitere Variante ohne Funktionsöffnung. Diese erforderliche Variantenvielfalt führt zu einem erhöhten Logistikaufwand und entsprechend zu erhöhten Produktionskosten.

Alternativ zu der Bereitstellung verschiedener Varianten von Verkleidungsbauteilen sind im Stand der Technik auch solche Verkleidungsbauteile üblich, bei welchen die optional gewünschte Funktionsöffnung mit einem Deckel abgedeckt ist, der bei Bedarf im Rahmen der Montage des Verkleidungsbauteils entfernt werden kann, um die Funktionsöffnung freizugeben. Umgekehrt ist es auch möglich, den Deckel nur dann an der Montagelinie zu setzen, falls er benötigt wird. Allerdings verursacht die optional notwendige Entfernung des Deckels, sofern die Funktionsöffnung gewünscht ist, beziehungsweise das optional notwendige Anbringen des Deckels, falls die Funktionsöffnung nicht benötigt wird, einen weiteren erforderlichen Montageschritt, der ebenfalls den Aufwand und die Produktionskosten erhöht.

Eine weitere denkbare Alternative, bei welcher bei Abwesenheit eines Funktionselements die dafür vorgesehene Funktionsöffnung offen und ungenutzt bleibt, ist zumeist aus ästhetischen Gründen abzulehnen, da dies für das optische Erscheinungsbild des Fahrzeuginnenraums nachteilig ist.

US 2016 031 490 A1 offenbart eine Fahrzeugbaugruppe mit einem inneren Karosserieblech mit einer Außenfläche, die einen Öffnungsabschnitt enthält, und einen Deckel, der entfernbar an dem Karosserieblech montiert ist. Der Deckel hat eine geschlossene Position zum Abdecken des Öffnungsabschnitts und eine geöffnete Position. Der Eingriff zwischen dem Deckel und dem Karosserieblech ist angepasst, um zu ermöglichen, dass der Deckel zumindest teilweise in den Öffnungsabschnitt schwenkt, wenn der Deckel von der geschlossenen Position in die geöffnete Position bewegt wird. Der Deckel definiert einen Deckelkörper mit einer Außenfläche. Derart offenbart die US 2016 031 490 A1 ein Verkleidungsbauteil für einen Fahrzeuginnenraum, nach dem Oberbegriff von Anspruch 1, welches eine Funktionsöffnung umfasst, welche derart ausgebildet ist, dass in der Funktionsöffnung in geöffnetem Zustand ein Funktionselement anordenbar ist.

Es ist daher die Aufgabe der Erfindung, eine Möglichkeit bereitzustellen, welche die optionale Bereitstellung einer Funktionsöffnung in einem Verkleidungsbauteil mit geringem Aufwand ermöglicht.

Diese Aufgabe wird erfindungsgemäß gelöst durch ein Verkleidungsbauteil, ein Fahrzeug, und ein Verfahren zur Montage eines Verkleidungsbauteils und ein Verfahren zur Herstellung eines Fahrzeugs mit den Merkmalen der jeweiligen unabhängigen Ansprüche. Vorteilhafte Ausgestaltungen sind in den Unteransprüchen und in der Beschreibung angegeben.

In einem Aspekt betrifft die Erfindung ein Verkleidungsbauteil für einen Fahrzeuginnenraum.

Das Verkleidungsbauteil umfasst eine Funktionsöffnung, welche derart ausgebildet ist, dass in der Funktionsöffnung in geöffnetem Zustand ein Funktionselement anordenbar ist, sowie eine selbstentriegelnde Abdeckung für die Funktionsöffnung. Die Abdeckung weist einen Deckel auf, welcher mit der Funktionsöffnung verrastet ist, dass eine Vorderseite des Deckels die Funktionsöffnung zumindest teilweise bedeckt. Zudem weist die Abdeckung zumindest ein Entriegelungselement auf, welches an einer der Vorderseite des Deckels abgewandten Rückseite des Deckels angeordnet ist. Dabei ist das Verkleidungsbauteil derart ausgebildet, dass durch eine Krafteinwirkung im Wesentlichen senkrecht zur Funktionsöffnung auf das Entriegelungselement der Deckel verschiebbar und/oder verformbar und die Verrastung des Deckels mit der Funktionsöffnung lösbar ist.

In einem weiteren Aspekt betrifft die Erfindung ein Fahrzeug mit einem erfindungsgemäßen Verkleidungsbauteil.

In einem weiteren Aspekt betrifft die Erfindung ein Verfahren zur Montage eines Verkleidungsbauteils mit einer Funktionsöffnung und einer in der Funktionsöffnung verrasteten, selbstentriegelnden Abdeckung in einem Fahrzeug oder an einem Fahrzeugbauteil. Das Verfahren umfasst ein Bereitstellen eines Funktionselements im Fahrzeug bzw. am Fahrzeugbauteil am Bestimmungsort der Funktionsöffnung des Verkleidungsbauteils. Außerdem umfasst das Verfahren ein Anordnen des Verkleidungsbauteils am Bestimmungsort im Fahrzeug bzw. am Fahrzeugbauteil derart, dass durch eine Kraftausübung im Wesentlichen senkrecht zur Funktionsöffnung mittels des Funktionselements die selbstentriegelnde Abdeckung betätigt wird und dadurch die in der Funktionsöffnung verrastete, selbstentriegelnde Abdeckung aus der Funktionsöffnung gelöst wird.

In einem weiteren Aspekt betrifft die Erfindung ein Verfahren zur Herstellung eines Fahrzeugs, umfassend ein Verfahren zur Montage eines Verkleidungsbauteils an einem Fahrzeugbauteil des Fahrzeugs gemäß einem Aspekt der Erfindung.

Eine selbstentriegelnde Abdeckung ist dabei eine Abdeckung, welche sich bei der Montage selbstständig von dem Verkleidungsbauteil trennt und die Funktionsöffnung freigibt, ohne dass dazu ein separater Arbeitsschritt bei der Montage erforderlich ist.

Eine Funktionsöffnung ist dabei eine Öffnung bzw. Ausnehmung in dem Verkleidungsbauteil, durch welche ein Funktionselement hindurchragen oder hindurchtreten kann und/oder mittels welcher ein unter dem Verkleidungsbauteil angeordnetes Funktionselement aus dem Fahrzeuginnenraum zugänglich ist.

Ein Verkleidungsbauteil ist dabei ein Bauteil der Verkleidung des Fahrzeuginnenraums. Insbesondere kann das Verkleidungsbauteil als Einstiegsleiste, Armaturenbrett, Handschuhfach, Mittelkonsole, Fahrzeuginnenraumboden, Dachhimmel, Türverkleidung und/oder Gepäckraumverkleidung oder als Teil eines dieser Elemente ausgebildet sein.

Dass der Deckel mit der Funktionsöffnung des Verkleidungsbauteils verrastbar ist, bedeutet, dass der Deckel kraftschlüssig und/oder formschlüssig mit dem Verkleidungsbauteil verbindbar ist. Mit anderen Worten kann der Deckel in der Funktionsöffnung des Verkleidungsbauteils verklemmt sein.

Dass die Krafteinwirkung zur Betätigung des Entriegelungselement in Richtung des Deckels erfolgt bedeutet dabei, dass die Krafteinwirkung zumindest teilweise und optional vollständig senkrecht zur Vorderseite des Deckels und/oder senkrecht zur Rückseite des Deckels erfolgt, d.h. dass die Krafteinwirkung nicht vollständig parallel zur Vorderseite und/oder Rückseite des Deckels erfolgt. Mit anderen Worten erfolgt die Krafteinwirkung auf das Entriegelungselement von hinten, d.h. von der dem Deckel abgewandten Seite, in Richtung des Deckels.

Dass die Krafteinwirkung im Wesentlichen senkrecht zur Funktionsöffnung auf das Entriegelungselement wirkt bedeutet dabei, dass die Krafteinwirkung nicht vollständig parallel zur Funktionsöffnung erfolgt, sondern eine senkrechte Vektorkomponente der Kraft relativ zur Fläche der Funktionsöffnung aufweist. Optional liegt der Winkelbereich, in dem die Krafteinwirkung auf das Entriegelungselement erfolgt, in einem Winkelbereich von 0° bis 45° um die Flächennormale der Fläche der Funktionsöffnung.

Die Erfindung bietet den Vorteil, dass nur eine Variante von Verkleidungsbauteilen bereitgestellt werden müssen, wenngleich dieses in manchen Ausführungen mit offengelegter Funktionsöffnung und in anderen Varianten mit abgedeckter Funktionsöffnung benötigt wird. Dadurch werden der Logistikaufwand und entsprechend die Produktionskosten verringert.

Ferner bietet die Erfindung den Vorteil, dass bei solchen Varianten von Fahrzeugen, an welchen die Funktionsöffnung für ein optionales Funktionselement gewünscht ist und bei denen das Funktionselement bereits vor der Montage des Verkleidungsbauteils montiert ist, die selbstentriegelnde Abdeckung bei der Montage des Verkleidungsbauteils selbstständig entfernt wird. Dies bietet den Vorteil, dass für die Entfernung des Deckels bzw. für die Freilegung der Funktionsöffnung kein zusätzlicher Arbeitsschritt erforderlich ist. Vielmehr bietet die Erfindung den Vorteil, dass die Entfernung der Abdeckung bzw. das Freilegen der Funktionsöffnung bei der regulären Montage des Verkleidungsbauteils, d.h. beim Anordnen des Verkleidungsbauteils am bestimmungsgemäßen Ort im Fahrzeuginnenraum bzw. am Fahrzeugbauteil, selbstständig erfolgt, ohne dass für den Monteur dafür ein zusätzlicher Aufwand entsteht.

Optional weist das Entriegelungselement an der Rückseite des Deckels eine Druckfläche auf, welche mit der zur Entriegelung der Verrastung erforderlichen Krafteinwirkung beaufschlagbar ist. Die Druckfläche bietet den Vorteil, die bei der Montage durch das Funktionselement bewirkte Krafteinwirkung aufzunehmen und an die gewünschte Stelle der Abdeckung zu leiten.

Optional ist die Druckfläche in einem spitzen Winkel zur Vorderseite des Deckels angeordnet. Dies bietet den Vorteil, dass die senkrecht in Richtung des Deckels auf das Entriegelungselement einwirkende Kraft zumindest teilweise umgelenkt werden kann, um auch eine Kraftkomponente parallel zum Deckel bereitzustellen. Dies kann für die Entriegelung der Verrastung vorteilhaft sein. Insbesondere kann die Abdeckung, bzw. das Entriegelungselement bzw. die Druckfläche derart ausgebildet sein, dass eine Krafteinwirkung durch das Funktionselement auf die Druckfläche eine Hebelwirkung auf den Deckel und/oder auf eine Rastausprägung des Entriegelungselements bewirkt, welche zur Entriegelung der Verrastung mit dem Verkleidungsbauteil führt.

Optional ist die Abdeckung derart ausgebildet, dass die Verformung des Deckels und/oder die Verschiebung des Deckels durch die Krafteinwirkung auf das Entriegelungselement zumindest teilweise senkrecht zur Richtung der Krafteinwirkung erfolgt. Dies bietet den Vorteil, dass auch Kraftkomponenten für die Entriegelung der Verrastung erzeugt und/oder genutzt werden können, die senkrecht zur ursprünglichen Krafteinwirkung, welche durch ein Drücken des Verkleidungsbauteils auf das Funktionselement entsteht, und auf diese Weise eine größere Flexibilität für Mechanismen zur Entriegelung der Verrastung erzielt wird.

Optional ist die selbstentriegelnde Abdeckung im montierten Zustand des Verkleidungsbauteils bei in der Funktionsöffnung angeordnetem Funktionselement von der Funktionsöffnung des Verkleidungsbauteils gelöst, insbesondere irreversibel gelöst.

Bei der besonders bevorzugten irreversiblen Ablösung der selbstentriegelnden Abdeckung ist mit anderen Worten in dem genannten Zustand die Abdeckung nicht wieder an der Funktionsöffnung anbringbar. Dies kann beispielsweise dadurch bedingt sein, dass sich das Funktionselement durch die Funktionsöffnung hindurch erstreckt und somit eine Anordnung der Abdeckung an der Funktionsöffnung nicht mehr ermöglicht. Optional kann dies auch dadurch bedingt sein, dass ein Verrasten in verbautem Zustand des Verkleidungsbauteils nicht mehr möglich ist, selbst wenn sich kein Funktionselement durch die Funktionsöffnung erstreckt. Dies bietet den Vorteil, dass ein nicht vorgesehenes Wiederverschließen der Funktionsöffnung mittels einer Abdeckung verhindert werden kann.

Optional ist das Verkleidungsbauteil als eine Einstiegsleiste ausgebildet ist. Dies bietet den Vorteil, dass insbesondere in der Einstiegsleiste das Anbringen von abgedeckten oder nichtabgedeckten Funktionsöffnungen, je nach Modellvariante des Fahrzeugs, erreicht werden kann. Beispielsweise kann das Funktionselement als eine Öse für ein Gepäcknetz ausgebildet sein oder eine solche umfassen. Die Anbringung von Ösen, etwa zur optionalen Befestigung eines Gepäcknetzes zur Trennung des Gepäckraums von Fahrgastraum, kann beispielsweise je nach Modellvariante des Fahrzeugs gewünscht oder unerwünscht sein, sodass entsprechend Einstiegsleisten mit und ohne entsprechende Funktionsöffnungen realisierbar sein müssen.

Optional wird der Deckel lediglich durch mechanische Kräfte aufgrund der Verrastung an dem Verkleidungsbauteil gehalten. Optional können der Deckel und/oder das Verkleidungsbauteil im Bereich der Funktionsöffnung entsprechende Rastnasen aufweisen. Dies bietet den Vorteil, dass die Anbringung der Abdeckung an der Funktionsöffnung ohne die Verwendung von separaten Befestigungsmitteln und/oder Haftmitteln erfolgen kann und entsprechend beim Entriegeln der Verrastung kein Entfernen solcher Befestigungsmittel und/oder Haftmittel erforderlich ist.

Optional ist die Abdeckung einstückig ausgebildet. Beispielsweise sind der Deckel und das Entriegelungselement als ein einziges Formstück ausgebildet. Optional ist die Abdeckung zumindest teilweise aus Kunststoff ausgebildet. Dies bietet den Vorteil, dass die Herstellung der Abdeckung besonders einfach und kostengünstig ausgestaltet werden kann.

Optional sind die selbstentriegelnde Abdeckung und das Verkleidungsbauteil als separate Bauteile ausgebildet. Dies bietet den Vorteil, dass eine saubere Trennung der Abdeckung von dem Verkleidungsbauteil beim Entriegeln der Verrastung erzielt werden kann. Gemäß anderen Ausführungsformen können jedoch die Abdeckung und das Verkleidungsbauteil einstückig ausgebildet sein.

Optional schließt die Vorderseite des Deckels zumindest teilweise im Wesentlichen bündig mit einer Außenfläche des Verkleidungsbauteils ab. Dies bedeutet dabei, dass die Vorderseite des Deckels und die den Deckel umgebende Außenfläche des Verkleidungsbauteils zumindest teilweise eine kontinuierliche Fläche bilden. Beispielsweise kann ein Rand des Deckels bündig mit der Außenfläche des Verkleidungsbauteils abschließen, sodass an der umlaufenden Kontur der Funktionsöffnung abgesehen von einer minimalen Fuge eine ebene Fläche durch die Außenfläche des Verkleidungsbauteils und den Deckel gebildet wird. Optional kann die Abdeckung derart ausgebildet sein, dass die Vorderseite des Deckels vollständig bündig mit der Außenfläche des Deckels abschließt und dabei der Deckel und die Außenfläche vollständig eine ebene Fläche bzw. Kontur bilden. Alternativ kann jedoch der Deckel auch eine Ausbeulung und/oder Einkerbung aufweisen, sodass dieser mit der Außenfläche keine vollständig ebene Fläche bzw. Kontur bildet. Gemäß anderen optionalen Ausführungsformen kann die Abdeckung Rastnasen aufweisen, welche um das die Funktionsöffnung begrenzende Verkleidungsbauteil herum anordenbar sind.

Die Montage des Verkleidungsbauteils kann dabei einen Teil eines Verfahrens zur Herstellung oder Reparatur eines Fahrzeugs bilden.

Ein Fahrzeug kann dabei beispielsweise in Form eines Landfahrzeugs, Luftfahrzeugs oder Wasserfahrzeugs ausgebildet sein. Ein Landfahrzeug kann beispielsweise als ein Straßenfahrzeug oder als ein schienengebundenes Fahrzeug ausgebildet sein. Insbesondere kann ein Fahrzeug als ein Kraftfahrzeug vorliegen, wie etwa als Personenkraftwagen, Lastkraftwagen, Autobus oder Motorrad.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst.

Weitere Einzelheiten und Vorteile der Erfindung sollen nun anhand der folgenden Beispiele und bevorzugten Ausführungsformen mit Bezug auf die Figuren näher erläutert werden.

Es zeigen:
- Fig. 1A und 1B: ein Verkleidungsbauteil gemäß einer optionalen Ausführungsform;
- Fig. 2A und 2B: eine selbstentriegelnde Abdeckung gemäß einer optionalen Ausführungsform;
- Fig. 3: ein montiertes Verkleidungsbauteil gemäß einer optionalen Ausführungsform mit sich hindurch erstreckendem Funktionselement;
- Fig. 4a, 4b, 4c: erläuternde Darstellungen zu einem optionalen Montageverfahren für ein Verkleidungsbauteil;
- Fig. 5: ein Fahrzeug gemäß einer optionalen Ausführungsform.

In den folgenden Figuren werden gleiche oder ähnliche Elemente in den verschiedenen Ausführungsformen der Einfachheit halber mit gleichen Bezugszeichen bezeichnet.

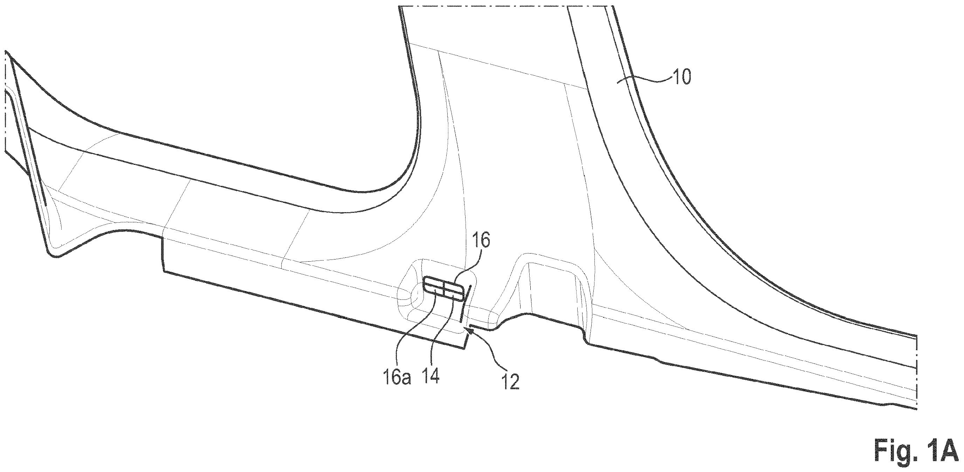

Figur 1A zeigt ein Verkleidungsbauteil 10 gemäß einer optionalen Ausführungsform. Gemäß der gezeigten Ausführungform ist das Verkleidungsbauteil 10 als eine Einstiegsleiste für den Innenraum eines Fahrzeugs ausgebildet. Im unteren Bereich weist das Verkleidungsbauteil 10 eine Einbuchtung 12 auf, in welcher eine Funktionsöffnung ausgebildet ist, die mit einer selbstentriegelnden Abdeckung 14 abgedeckt ist und daher in der gezeigten Ansicht nicht zu erkennen ist. Dabei ist lediglich die Vorderseite der Abdeckung zu erkennen, welche durch die Vorderseite 16a eines Deckels 16 gebildet wird.

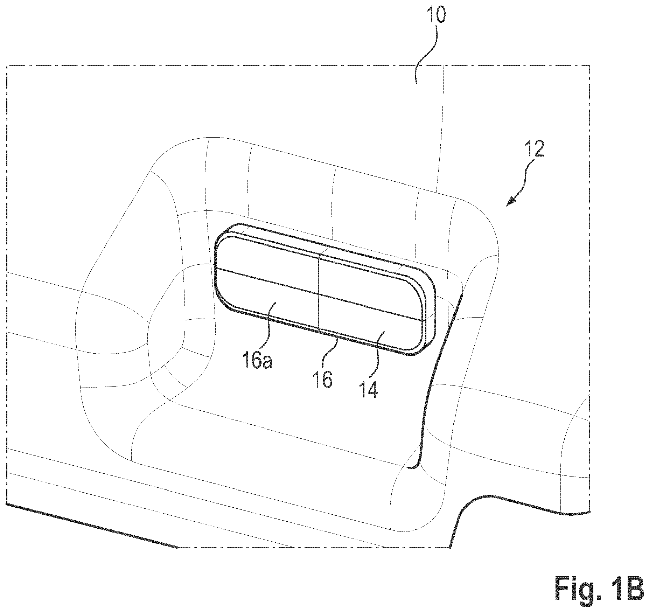

Die Einbuchtung 12 mit der Abdeckung 14 ist in Figur 1B in einer vergrößerten Darstellung gezeigt. Dabei ist erkennbar, dass die Abdeckung 14 die Funktionsöffnung in dem Verkleidungsbauteil vollständig ausfüllt und abdeckt, sodass die Funktionsöffnung nicht zu erkennen ist. Die Abdeckung 12 dient dazu, die Funktionsöffnung für solche Modellvarianten des Fahrzeugs, in welches die Seitenleiste eingebaut werden soll, verschlossen zu halten, in denen an der jeweiligen Position kein Funktionselement und entsprechend auch keine Funktionsöffnung bereitgestellt werden soll. Wird das Verkleidungsbauteil 10 jedoch in anderen Modellvarianten verwendet, in welchen ein Funktionselement an der entsprechenden Stelle ausgebildet ist, wird bei der Montage des Verkleidungsbauteils 10 die Abdeckung 14 selbstständig entriegelt, sodass die Funktionsöffnung und das Funktionselement freigegeben werden und die Abdeckung 14 entfernt wird. Gemäß anderen optionalen Ausführungsformen ist die Abdeckung nicht in einer Einbuchtung des Verkleidungsbauteils 10 angeordnet.

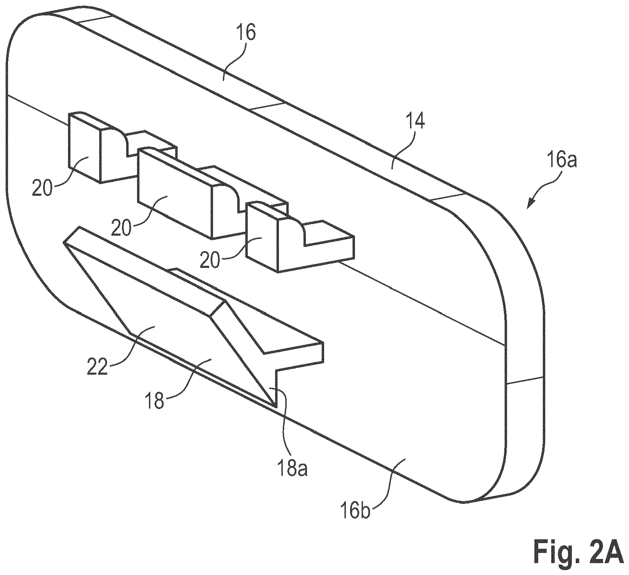

Figur 2A zeigt die selbstentriegelnde Abdeckung 14 in Alleinstellung von der Rückseite betrachtet. An der Rückseite 16b der Abdeckung 14 bzw. des Deckels 16 ist ein Entriegelungselement 18 ausgebildet, sowie mehrere Rastnasen 20, wobei auch das Verriegelungselement 18 eine Rastausprägung 18a aufweist. Mittels der Rastnasen 20 und der Rastausprägung 18a des Entriegelungselements 18 kann die Abdeckung 14 mit einer dafür vorgesehenen Funktionsöffnung des Verkleidungsbauteils 10 verrastet werden, sodass die Abdeckung 14 formschlüssig und/oder kraftschlüssig mit dem Verkleidungsbauteil 10 verbunden ist. Des Weiteren weist das Entriegelungselement 18 eine Druckfläche 22 auf, welche sich in einem spitzen Winkel relativ zur Rückseite 16b und zur Vorderseite des Deckels 16 bzw. relativ zur Vorderseite 16a des Deckels 16 erstreckt. Das Entriegelungselement 14 und insbesondere die Druckfläche 22 sind dazu ausgebildet, eine Kraft aufzunehmen, welche beim Montieren des Verkleidungsbauteils 10 in ein Fahrzeug auf das Entriegelungselement einwirkt, wenn ein Funktionselement an der Stelle ausgebildet ist, an welcher die Funktionsöffnung des Verkleidungsbauteils 10 angeordnet werden soll, sodass sich das Funktionselement durch die Funktionsöffnung hindurch erstreckt. Durch die Krafteinwirkung wird sodann die Verriegelung der Abdeckung 14 mit der Funktionsöffnung gelöst, wie weiter unten noch im Detail beschrieben wird.

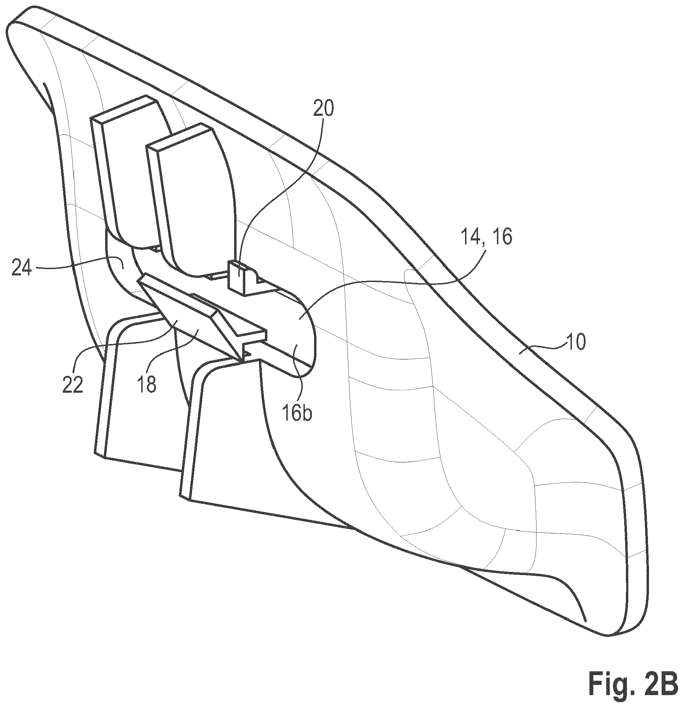

Figur 2B zeigt einen Ausschnitt des Verkleidungsbauteils 10 von dessen Rückseite, welche auch die Rückseite der Abdeckung 14 bzw. die Rückseite 16b des Deckels 16 zu erkennen gibt. Die Abdeckung 14 ist dabei mittels der Rastnasen 20 und der Rastausprägung 18a des Entriegelungselements 18 mit der Funktionsöffnung 24 verrastet, sodass die Abdeckung 14 in der Funktionsöffnung 24 gehalten wird und diese verschließt bzw. abdeckt.

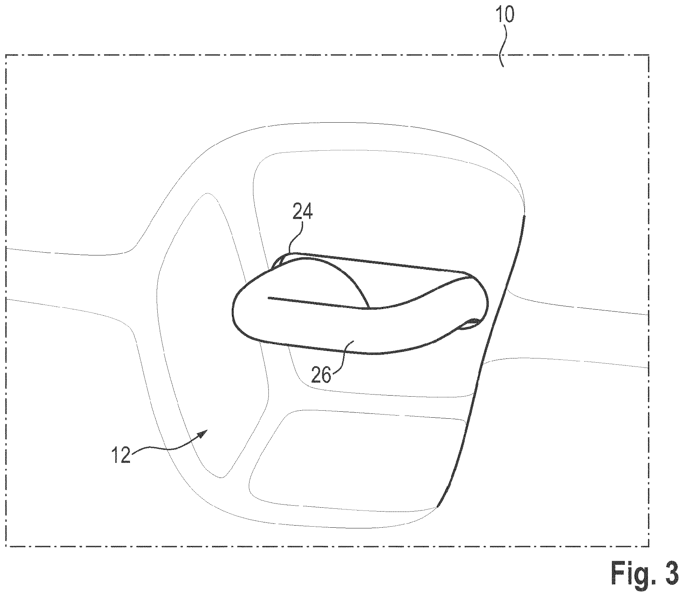

Figur 3 zeigt das als Einstiegsleiste ausgebildete Verkleidungsbauteil 10 gemäß der in den Figuren 1A und 1B gezeigten Ausführungsform erneut von der Vorderseite, jedoch in einem Zustand, in dem ein Funktionselement 26 an der Stelle der Funktionsöffnung ausgebildet ist und die Abdeckung 14 entsprechend bei der Montage des Verkleidungsbauteils 10 selbstständig aus der Verrastung mit der Funktionsöffnung 24 gelöst und entfernt wurde. Dadurch, dass die Abdeckung 14 die Funktionsöffnung 24 nicht mehr bedeckt, ist die Funktionsöffnung 24 zu erkennen, sowie das Funktionselement 26, welches sich durch die Funktionsöffnung 24 des Verkleidungsbauteils 10 hindurch erstreckt.

Das Funktionselement 26 ist dabei als eine Öse ausgebildet. Gemäß der gezeigten optionalen Ausführungsform handelt es sich dabei um eine Öse, welche mit der Fahrzeugkarosserie (nicht gezeigt) verbunden ist und in welcher ein Gepäcknetz (nicht gezeigt) befestigt werden kann. Dadurch, dass die Öse einerseits an der unter bzw. hinter dem Verkleidungsbauteil befindlichen Fahrzeugkarosserie befestigt werden muss und andererseits vom Fahrzeuginnenraum zur Befestigung des Gepäcknetzes zugänglich sein muss, ist es erforderlich, die Funktionsöffnung 24 bereitzustellen, durch welche sich das Funktionselement 26 hindurch erstrecken kann. Die Einbuchtung 12 ist dabei gemäß der gezeigten optionalen Ausführungsform derart ausgebildet, dass diese das Funktionselement 24 einbettet, sodass das Funktionselement 24 kein freistehendes Hindernis im Fahrzeuginnenraum darstellt.

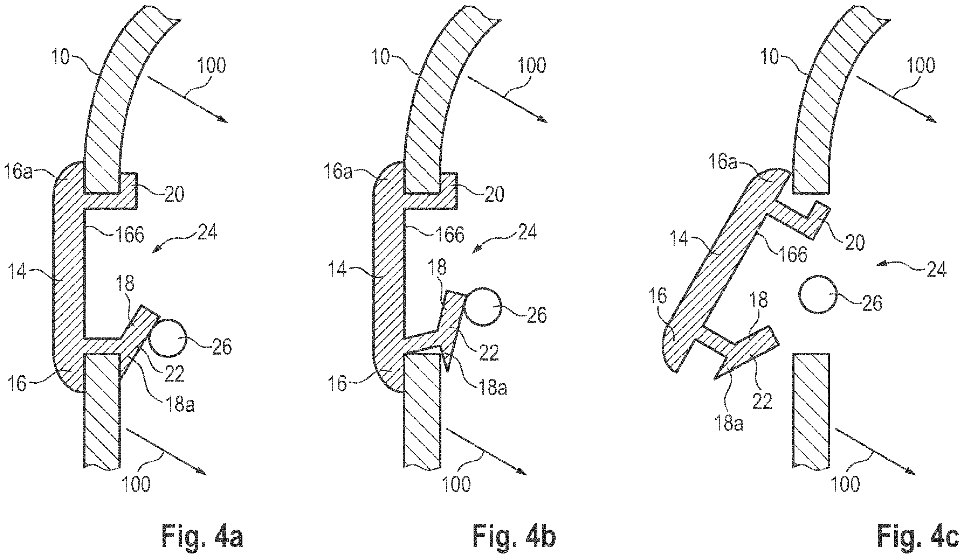

Die Figuren 4a bis 4c erläutern in schematischen Darstellungen ein Verfahren gemäß einer optionalen Ausführungsform zur Montage des Verkleidungsbauteils 10 in einem Fahrzeuginnenraum, wobei an der Position, an welcher die Funktionsöffnung 24 angeordnet wird, ein Funktionselement 26 ausgebildet ist.

Dabei wird das Verkleidungsbauteil in einem vorbestimmten Winkelbereich an die gewünschte Position gedrückt, in welcher das Verkleidungsbauteil 10 im Fahrzeuginnenraum angeordnet werden soll. Der Winkelbereich kann beispielsweise in einem Bereich von 0° bis 45° relativ zur Flächennormale der Funktionsöffnung bzw. der von der Funktionsöffnung 24 aufgespannten Fläche ausgebildet sein. Die in den Figuren 4a bis 4c dargestellte Bewegungsrichtung ist mit den Pfeilen 100 angedeutet.

Bei der Bewegung des Verkleidungsbauteils 10 in die bestimmungsgemäße Position bei der Montage kommt das Entriegelungselement 18 derart mit dem Funktionselement 26 in Kontakt, dass das Funktionselement 26 die Druckfläche 22 mit einer Kraft beaufschlagt. Wird die Bewegung des Verkleidungsbauteils 10 bei der Montage in Richtung der bestimmungsgemäßen Position fortgesetzt, wird die Druckkraft des Funktionselements 26 auf das Entriegelungselement 18 derart stark, dass das Entriegelungselement 18 die Abdeckung 14 verformt. Gemäß der gezeigten Ausführungsform umfasst die Verformung der Abdeckung 14 insbesondere ein derartiges Verformen des Entriegelungselements 18, dass sich die Rastabdeckung 18a von dem Verkleidungsbauteil 10 löst. In Figur 4c ist die Verformung durch die Krafteinwirkung über das Funktionselement derart stark ausgeprägt, dass die Rastausprägung 18a die Verrastung löst und entsprechend die Abdeckung 14 von der Funktionsöffnung 24 freigibt und entsprechend die Funktionsöffnung 24 freilegt. Die dabei auf das Entriegelungselement 18 einwirkende Kraft beschränkt sich bei der gezeigten Ausführungsform auf jene Kraft, mit der bei der Montage des Verkleidungsbauteils 10 das Verkleidungsbauteil 10 in die gewünschte Position und entsprechend das Entriegelungselement auf das Funktionselement 26 gedrückt wird. Beispielsweise kann dieser Montageschritt durch einen Monteur und/oder einen Roboter durchgeführt werden.

Auf diese Weise löst sich bei der Montage des Verkleidungsbauteils die selbstentriegelnde Abdeckung 14 vom Verkleidungsbauteil 10 und gibt die Funktionsöffnung 24 frei, wenn ein Funktionselement 26 an der entsprechenden Position ausgebildet ist. Sofern kein Funktionselement 26 an der entsprechenden Stelle während der Montage des Verkleidungsbauteils 10 ausgebildet ist, wird die Abdeckung 14 nicht entriegelt und entsprechend auch nicht von dem Verkleidungsbauteil 10 entfernt, sodass die Funktionsöffnung 24 abgedeckt beleibt.

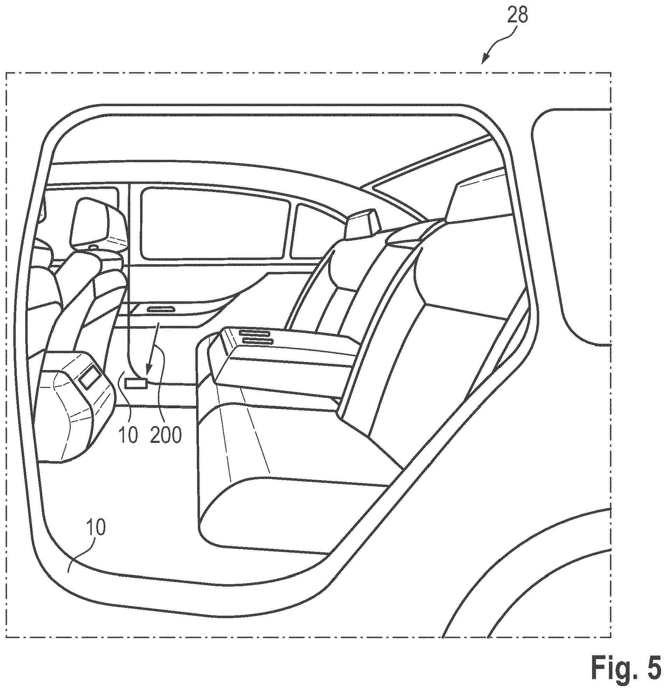

Figur 5 zeigt ein Fahrzeug 28 gemäß einer optionalen Ausführungsform, wobei die gezeigte Darstellung eine Ansicht des Fahrzeuginnenraums durch die linke hintere Türe des Fahrzeugs bietet. Der Pfeil 200 kennzeichnet dabei die Position, an welcher das als Einstiegsleiste ausgebildete Verkleidungsbauteil 10 angeordnet ist, welches eine selbstentriegelnde Abdeckung 14 aufweist. Die selbstentriegelnde Abdeckung 14 ist dabei lediglich schematisch angedeutet und zur Kenntlichmachung farblich hervorgehoben. In andern Ausführungsformen kann die selbstentriegelnde Abdeckung 14 farblich an das Verkleidungsbauteil angepasst sein und farblich mit diesem übereinstimmen. Die selbstentriegelnde Abdeckung ist gemäß der gezeigten Ausführungsform im Fußraum der Rücksitzbank angeordnet. Sofern gemäß einer anderen Variante des Fahrzeugs 28 dort eine Öse für ein Gepäcknetz gewünscht und vormontiert ist, wird bei der Montage des Verkleidungsbauteils 10 die selbstentriegelnde Abdeckung 14 entfernt und die Funktionsöffnung 24 für die Öse freigegeben.

### Bezugszeichenliste

- 10: Verkleidungsbauteil
- 12: Einbuchtung
- 14: selbstentriegelnde Abdeckung
- 16: Deckel
- 16a: Vorderseite des Deckels
- 16b: Rückseite des Deckels
- 18: Entriegelungselement
- 18a: Rastausprägung des Entriegelungselements
- 20: Rastnase
- 22: Druckfläche
- 24: Funktionsöffnung
- 26: Funktionselement
- 28: Fahrzeug

- 100: Bewegungsrichtung des Verkleidungsbauteils bei der Montage
- 200: Pfeil zur Kenntlichmachung der Position der selbstentriegelnden Abdeckung

## Patentansprüche

1. Verkleidungsbauteil (10) für einen Fahrzeuginnenraum, das Verkleidungsbauteil (10) umfassend eine Funktionsöffnung (24), welche derart ausgebildet ist, dass in der Funktionsöffnung (24) in geöffnetem Zustand ein Funktionselement (26) anordenbar ist, **dadurch gekennzeichnet, dass** das Verkleidungsbauteil weiterhin umfasst:
- eine selbstentriegelnde Abdeckung (14) für die Funktionsöffnung (24), wobei die Abdeckung (14) einen Deckel (16) aufweist, welcher mit der Funktionsöffnung (24) verrastet ist und eine Vorderseite (16a) des Deckels (16) die Funktionsöffnung (24) zumindest teilweise bedeckt, und wobei die Abdeckung (14) zumindest ein Entriegelungselement (18) aufweist, welches an einer der Vorderseite (16a) des Deckels (16) abgewandten Rückseite (16b) des Deckels (16) angeordnet ist;
wobei das Verkleidungsbauteil (10) derart ausgebildet ist, dass durch eine Krafteinwirkung im Wesentlichen senkrecht zur Funktionsöffnung (24) auf das Entriegelungselement (18) der Deckel (16) verschiebbar und/oder verformbar und die Verrastung des Deckels (16) mit der Funktionsöffnung (24) lösbar ist.

2. Verkleidungsbauteil (10) gemäß Anspruch 1, wobei die selbstentriegelnde Abdeckung (14) in montiertem Zustand des Verkleidungsbauteils (10) bei in der Funktionsöffnung (24) angeordnetem Funktionselement (26) von der Funktionsöffnung (24) des Verkleidungsbauteils (10) gelöst ist, insbesondere irreversibel gelöst ist.

3. Verkleidungsbauteil (10) gemäß einem der Ansprüche 1 bis 2, wobei das Verkleidungsbauteil (10) als eine Einstiegsleiste ausgebildet ist.

4. Fahrzeug (28) mit einem Verkleidungsbauteil (10) gemäß einem der Ansprüche 1 bis 3.

5. Verfahren zur Montage eines Verkleidungsbauteils (10), das eine Funktionsöffnung (24) und eine in der Funktionsöffnung (24) verrastete selbstentriegelnde Abdeckung (14) aufweist, an einem Fahrzeugbauteil, wobei das Verfahren die folgenden Schritte umfasst:
- Bereitstellen eines Funktionselements (26) am Fahrzeugbauteil am Bestimmungsort der Funktionsöffnung (24) des Verkleidungsbauteils (10);
- Anordnen des Verkleidungsbauteils (10) am Bestimmungsort am Fahrzeugbauteil derart, dass durch eine Kraftausübung im Wesentlichen senkrecht zur Funktionsöffnung (24) mittels des Funktionselements (26) die selbstentriegelnde Abdeckung betätigt wird und dadurch die in der Funktionsöffnung (24) verrastete, selbstentriegelnde Abdeckung (14) aus der Funktionsöffnung (24) gelöst wird.

6. Verfahren gemäß Anspruch 5, wobei das Funktionselement (26) als eine Öse für ein Gepäcknetz ausgebildet ist oder eine solche umfasst.

7. Verfahren zur Herstellung eines Fahrzeugs (28), umfassend ein Verfahren zur Montage eines Verkleidungsbauteils (10) an einem Fahrzeugbauteil des Fahrzeugs gemäß einem der Ansprüche 5 bis 6.

## Claims

1. Trim component (10) for a vehicle interior compartment, the trim component (10) comprising a functional opening (24) which is configured in such a way that, in an open state, a functional element (26) can be arranged in the functional opening (24), **characterized in that** the trim component comprises, furthermore:
- a self-unlocking cover (14) for the functional opening (24), the cover (14) having a lid (16) which is latched to the functional opening (24), and a front side (16a) of the lid (16) covering the functional opening (24) at least partially, and the cover (14) having at least one unlocking element (18) which is arranged on a rear side (16b) of the lid (16) which faces away from the front side (16a) of the lid (16),
the trim component (10) being configured in such a way that the lid (16) can be displaced and/or deformed and the latching action of the lid (16) to the functional opening (24) can be released by way of an action of force substantially perpendicularly with respect to the functional opening (24) on the unlocking element (18).

2. Trim component (10) according to Claim 1, the self-unlocking cover (14) being released, in particular being released reversibly, from the functional opening (24) of the trim component (10) in a mounted state of the trim component (10) with a functional element (26) arranged in the functional opening (24).

3. Trim component (10) according to either of Claims 1 or 2, the trim component (10) being configured as a kick plate.

4. Vehicle (28) with a trim component (10) according to one of Claims 1 to 3.

5. Method for mounting a trim component (10), which has a functional opening (24) and a self-unlocking cover (14) which is latched in the functional opening (24), to a vehicle component, the method comprising the following steps:
- providing a functional element (26) on the vehicle component at the intended location of the functional opening (24) of the trim component (10);
- arranging of the trim component (10) at the intended location on the vehicle component in such a way that the self-unlocking cover is actuated by way of an exertion of force substantially perpendicularly with respect to the functional opening (24) by means of the functional element (26) and, as a result, the self-unlocking cover (14) which is latched in the functional opening (24) is released from the functional opening (24).

6. Method according to Claim 5, the functional element (26) being configured as an eyelet for a luggage net or comprising an eyelet of this type.

7. Method for producing a vehicle (28), comprising a method for mounting a trim component (10) on a vehicle component of the vehicle according to either of Claims 5 or 6.

## Revendications

1. Élément d'habillage (10) pour un habitacle de véhicule, l'élément d'habillage (10) comprenant une ouverture fonctionnelle (24) qui est conçue de telle sorte qu'un élément fonctionnel (26) soit apte à être disposé dans l'ouverture fonctionnelle (24) à l'état ouvert, **caractérisé en ce que** l'élément d'habillage comprend en outre :
- un capot (14) à déverrouillage automatique pour l'ouverture fonctionnelle (24), le capot (14) présentant un couvercle (16) qui est encliqueté sur l'ouverture fonctionnelle (24) et une face avant (16a) du couvercle (16) recouvrant au moins partiellement l'ouverture fonctionnelle (24), et le capot (14) présentant au moins un élément de déverrouillage (18) qui est disposé sur une face arrière (16b) du couvercle (16) opposée à la face avant (16a) du couvercle (16) ;
l'élément d'habillage (10) étant conçu de telle sorte que, par l'application d'une force essentiellement perpendiculaire à l'ouverture fonctionnelle (24) sur l'élément de déverrouillage (18), le couvercle (16) est apte à être déplacé et/ou déformé, et l'encliquetage du couvercle (16) avec l'ouverture fonctionnelle (24) est apte à être supprimé.

2. Élément d'habillage (10) selon la revendication 1, dans lequel le capot (14) à déverrouillage automatique est détaché, en particulier détaché de manière irréversible, de l'ouverture fonctionnelle (24) de l'élément d'habillage (10) à l'état monté de l'élément d'habillage (10) lorsque l'élément fonctionnel (26) est disposé dans l'ouverture fonctionnelle (24).

3. Élément d'habillage (10) selon l'une des revendications 1 à 2, l'élément d'habillage (10) étant réalisé sous la forme d'une baguette de seuil.

4. Véhicule (28) comprenant un élément d'habillage (10) selon l'une des revendications 1 à 3.

5. Procédé de montage sur un composant de véhicule d'un élément d'habillage (10) présentant une ouverture fonctionnelle (24) et un capot (14) à déverrouillage automatique encliqueté dans l'ouverture fonctionnelle (24), le procédé comprenant les étapes suivantes :
- prévoir un élément fonctionnel (26) sur le composant de véhicule à l'emplacement de destination de l'ouverture fonctionnelle (24) de l'élément d'habillage (10) ;
- disposer l'élément d'habillage (10) à l'emplacement de destination sur l'élément de véhicule de telle sorte que, par l'exercice d'une force essentiellement perpendiculaire à l'ouverture fonctionnelle (24), le couvercle à déverrouillage automatique est actionné au moyen de l'élément fonctionnel (26) et que, de ce fait, le couvercle à déverrouillage automatique (14) encliqueté dans l'ouverture fonctionnelle (24) est libéré de l'ouverture fonctionnelle (24).

6. Procédé selon la revendication 5, dans lequel l'élément fonctionnel (26) est conçu sous la forme d'un œillet pour un filet à bagages ou comprend un tel oeillet.

7. Procédé de fabrication d'un véhicule (28) comprenant un procédé de montage d'un élément d'habillage (10) sur un élément de construction du véhicule selon l'une quelconque des revendications 5 à 6.
